# EUROPEAN PATENT SPECIFICATION

(11) **EP 1 684 908 B1**
(45) Date of publication and mention of the grant of the patent: **28.12.2011**
(21) Application number: 04789602.2
(22) Date of filing: 22.10.2004
(51) Int. Cl.: B02C 18/00, E03C 1/266

(54) **PUTRESCIBLE ORGANIC WASTE TREATMENT**
BEHANDLUNG VON FÄULNISFÄHIGEM ORGANISCHEM ABFALL
TRAITEMENT DE DECHETS ORGANIQUES PUTRESCIBLES

(30) Priority: 22.10.2003 AU 2003905813
(43) Date of publication of application: 02.08.2006
(73) Proprietor: Pioneer Waste Management Holdings Trust Pty Limited, Taren Point, NSW 2229 (AU)
(72) Inventor: MANCUSO, Noel Anthony Mark, PO Box 2022 Taren Point, NSW 2229 (AU)
(74) Representative: Hallybone, Huw George
(86) International application number: PCT/AU2004/001460
(87) International publication number: WO 2005/039775

(56) References cited:
- WO-A-02/00351
- FR-A- 2 668 953
- GB-A- 1 390 735
- DATABASE WPI Week 200026, Derwent Publications Ltd., London, GB; Class P41, AN 2000-296923, XP003001431 & JP 2000 084431 A (TOTO LTD) 28 March 2000
- DATABASE WPI Week 199831, Derwent Publications Ltd., London, GB; Class D16, AN 1998-355715, XP003001432 & JP 10 137 266 A (MATSUSHITA DENKI SANGYO KK) 26 May 1998
- DATABASE WPI Week 200167, Derwent Publications Ltd., London, GB; Class P41, AN 2001-593554, XP003001433 & JP 2001 232228 A (SEKISUI CHEM IND CO LTD)

## Description

### Field of the invention

The present invention relates to a putrescible organic waste treatment system and method and to a system and method for producing a feed source for producing biogas fuel.

### Background of the invention

Waste disposal units are used to comminute putrescible organic waste into a slurry or pulp for transport away from the point at which comminution occurs. In domestic situations, the waste disposal unit may be located adjacent to a kitchen sink area where food is prepared.

Larger scale waste disposal units may also be used in industrial applications such as in restaurants, canteens, hotel kitchens, fruit/vegetable shops, food courts, hospitals, fast food outlets, clubs, bakeries and supermarkets, Such units are often used to reduce the waste to a slurry and water is added as a delivery means so as to transport the slurry down a waste line to a waste outlet, for example a sewerage system. The resultant product transported to the waste outlet is substantially a liquid.

After treatment in the waste disposal unit, the waste pulp is usually eliminated by disposal in the sewerage system, thereby increasing the amount of waste that that will require treatment through the sewer system. Furthermore, there is no automated control over the amount of water required to flush the putrescible organic waste during comminution and hence there is a strong possibility that an excess amount of water may be used in the comminution process. This of course leads to wastage of scheme water which is environmentally undesirable and expensive.

A further disadvantage in disposing putrescible organic waste in sewerage systems is that a potential energy source is not utilised. Biological waste can be digested in anaerobic reactors to produce 'biogas'. Biogas is about 60-65 % methane and can be used as a fuel source to generate electricity. The residual slurry product may then be further processed for use as a fertilizer. At the time of writing, this technology has been implemented by Biotechnische Abfallverwertung GmbH & Co KG (BTA) in 22 plants worldwide. A problem for biogas producers such as BTA is that the biological waste feed collected for the biogas digester can be contaminated with inorganic materials such as plastics, cardboard and ceramics due to the inadvertent inclusion at the point of collection of the putrescible organic waste material.

Prior art devices include WO 02/00351, which discloses an apparatus for comminuting or finely dividing waste material, such as food waste and/or domestic waste, in water to form slurry. The slurry is said to be suited for biogas-winning and have a high dry solids content. The apparatus includes a tubular wall whose inner surface has an axis about which the inner surface is rotationally symmetrical. The inner surface has disposed around the periphery of the wall slot-like sieve openings which are generally similarly orientated in relation to each other, wherewith the wall delimits a comminuting chamber which includes a rotationally-driven knife carrier which is adapted to rotate about the axis of the wall, and which carries a cutting edge. The cutting edge is adapted to move tightly adjacent the inner surface of the wall and to sweep over the slot openings. The cutting edge defines an angle in the region of 10-80° relative to the length axis of respective swept slots, as seen in the inner surface of the wall, wherein the direction of rotation of the cutting edge deviates from the length axis of said slots by at least 10°.

FR 2 668 953 discloses an automated apparatus for fluidising waste, particularly household waste. The apparatus includes a detector, which is sensitive to an impact applied by an operator to the apparatus when waste is inserted into it, and a control means connected to the impact detector. The control means is sensitive to a signal sent out by the detector in order sequentially to control the operation of a crusher (shredder) and a water supply means. This apparatus is said to allow waste to be crushed and fluidised more easily.

JP 10 137,726 discloses a garbage pulverizing and fermenting device. The device aims to prevent the discharge of waste water to sewerage, to provide simple constitution for equipment, and to eliminate clogging of a conveying path. Accordingly, the device is provided with a garbage pulverizing means for pulverizing garbage together with a small quantity of water to form it into high viscosity garbage pulverized matter. A fermenting tank is also provided for fermenting the high viscosity garbage pulverized matter to make compost.

Any discussion of documents, publications, acts, devices, substances, articles, materials or the like which is included in the present specification has been done so for the sole purpose so as to provide a contextual basis for the present invention. Any such discussions are not to be understood as admission of subject matter which forms the prior art base, or any part of the common general knowledge of the relevant technical field in relation to the technical field of the present invention to which it extended at the priority date or dates of the present invention.

### Summary of the invention

In a first aspect, the present invention provides a putrescible organic waste treatment system according to claim 1.

In a second aspect, the present invention provides a method of treating putrescible organic waste according to claim 21.

Preferably, the predetermined physical characteristic of the waste pulp includes a predefined moisture content, density and/or range of densities and/or flow characteristics.

The putrescible organic waste treatment system further comprising a receptacle for receiving waste pulp from said comminution unit, wherein said receptacle is in fluid communication with said comminution unit.

Preferably, the comminution unit comprises a chamber for receiving the putrescible organic waste and may be positioned above the comminution means. The chamber may include a conical wall portion extending radially inwardly and downwardly toward the comminution means to facilitate delivery of the putrescible organic waste to the comminution means.

The chamber may optionally include a floor portion which is moveable from a closed position to an open position so as to allow transfer of the putrescible organic waste from the chamber to the comminution means. The floor portion may include at least two floor members extending radially outwardly and pivotably connected to the remaining potion of the chamber and arranged so as to be movable to the open position by an actuator such that the at least two floor members extend downwardly into said conical portion and allow the passage of putrescible organic waste to the comminution means.

In one embodiment, the waste treatment system further comprises a weighing means arranged so as to determine the weight of putrescible organic waste in the chamber when the floor members are in a closed position. Preferably the weighing means is arranged so as to measure the weight of putrescible organic waste from the load applied to the floor members whilst in the closed position. More preferably, the quantity of water supplied to the comminution means so as to produce a waste pulp having the predetermined physical characteristic is determined by the weight of the putrescible organic waste.

In another embodiment, the waste treatment system further comprising a sensing means for determining the level of putrescible organic waste in the chamber, wherein the level of putrescible organic waste is indicative of the amount of putrescible organic waste in the chamber. Preferably the quantity of water supplied to the comminution means so as to produce the waste pulp having the predetermined physical characteristic is determined by amount of the putrescible organic waste.

Preferably, the comminution unit further includes a primary water inlet located in the chamber and in fluid communication with said supply of water. The comminution unit may further include a secondary water inlet located below the primary water inlet to ensure that water centrifugally flows through the conical portion.

The flow rate and/or flow volume of water supplied to the comminution means is preferably regulated by a control valve which regulates the flow rate and/or flow volume of the supply of water. Preferably the system further comprising a control system for controlling the control valve. More preferably, the control system is a programmable logical controller.

The particular amount of putrescible organic waste may be manually entered into the control system by a user or alternatively the particular amount of putrescible organic waste is automatically entered into the control system.

The comminution unit may further comprise an outlet below the comminution means for passage of the pulp to the receptacle. The outlet may be in fluid communication with a pump for pumping the pulp to the receptacle.

In a further embodiment, the volume of the putrescible organic waste supplied to the comminution means during a comminution operation is optionally used as a control variable to determine the amount of water supplied to the comminution unit.

Preferably the volume is input by an operator of the comminution unit prior to a comminution operation. The volume input may be by a control panel connected to the comminution unit. The control panel may optionally allow an operator to select between a quarter-full chamber, a half-full chamber, a three quarter-full chamber or a full chamber, for example.

The control means may be adapted to send a control signal to a water inlet valve connected to the primary water inlet and the optional secondary water inlet, the control signal being to open and close the respective primary and secondary water inlets.

Optionally, the inlet of a two-way valve is connected to the outlet of the comminution unit. One outlet of the two-way valve may be connected to the receptacle and another outlet of the two-way valve may be connected to a drainage pipe.

The control means may be able to send a signal to the two way valve to open either outlet of the two-way valve.

The receptacle may include an outlet passage and a valve may be located in the outlet passage. The receptacle includes a level indicator means to indicate the level of waste pulp in the receptacle. The level indicator means may be made from transparent material located on at least a side wall of the receptacle to visually indicate the level of pulp located in the receptacle. Alternatively, the indicator means may be an electronic indicator that is connected to the control means to indicate the level of the receptacle at any point in time. Optionally, the control means may provide a level signal to on a control panel that is visually accessible to an operator of the comminution unit.

Throughout the specification the term "comprise" and variations on this term including "comprising" and "comprises" are to be understood to imply the inclusion of a feature, integer, step or element, and not exclude other features, integers, steps or elements.

### Brief description of the drawings

A preferred exemplary embodiment of the invention will now be described by way of example only with reference to the accompanying drawings in which:
Figure 1 shows a schematic diagram of a putrescible organic waste treatment system according to a preferred embodiment;
Figure 2 shows a detailed schematic view of the comminution unit of Figure 1;
Figure 3 shows a cross-sectional view of through lines 2a-2a to 2b-2b of Figure 2, in which the floor portion is depicted in a closed position;
Figure 4 shows the floor portion of the comminution unit of Figure 3 depicted in an open position;
Figure 5 shows a control panel for use in the embodiment depicted in Figure 1;
Figure 6 shows a control diagram for controlling the density or range of densities of the pulp slurry according to the embodiment of Figure 1;
Figure 7 shows an alternative control diagram to control the pulp density or range of pulp densities of the pulp slurry according to another embodiment; and
Figure 8 shows a control panel for use in the embodiment of Figure 7.

### Detailed description of the embodiments

The following description refers to preferred embodiments of the putrescible organic waste treatment system present, treatment method, and method and system for producing a biogas fuel according to the present invention. To facilitate an understanding of the invention, reference is made in the description to the accompanying drawings whereby the present invention is illustrated in a preferred embodiment. Similar components between the embodiments are identified by the same reference numerals.

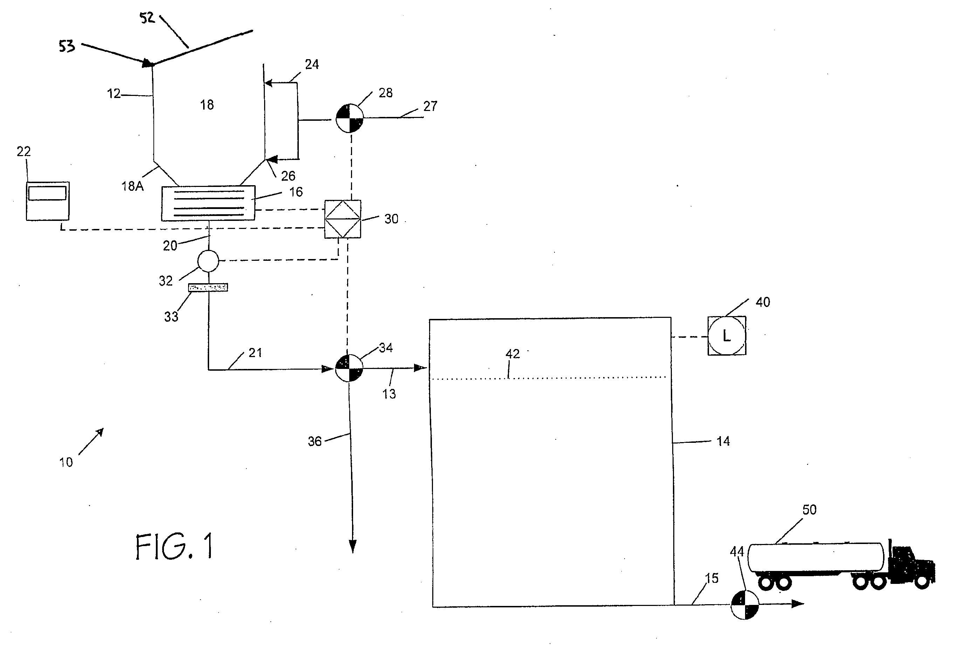

Figure 1 shows a schematic diagram of a preferred embodiment of the invention in which there is shown a putrescible organic waste treatment system 10 that includes a comminution unit 12. The comminution unit 12 includes comminution means in the form of cutting blades 16 which are operable by a motor to comminute putrescible organic waste into a pulp or slurry during a comminution operation. It will be appreciated that in alternative embodiments, other comminution units may also be used, for example a grinding unit or a hammermill for example. A water supply 27 is also connected to the comminution unit and is controlled by a control means in the form of a programmable logic controller (PLC) 30.

The PLC 30 is programmed to control the water supplied to the comminution unit during comminution of the putrescible organic waste to ensure that any one or more of the following pulp characteristics are produced by the comminution unit:
a defined pulp density;
range of pulp densities;
a defined moisture content; or
a range of moisture contents, flow characteristic or range of flow characteristics.

The optimal density, moisture content and flow characteristics may be chosen to ensure the most efficient transportation of the pulp waste material, or for the application or use of the pulp waste material. For example, the pulp waste material may be transported to a biogas plant for use in a digester for the production of biogas.

The schematic diagram of Figure 1 depicts a putrescible organic waste treatment system 10 according to the present invention. The putrescible organic waste treatment system 10 includes a comminution unit 12 having an outlet 20 that is in fluid communication with a receptacle in the form of a holding tank 14. The system 10 also includes a control panel 22 that is used to control the comminution unit 12.

The comminution unit 12 includes an internal chamber 18 which is used to receive putrescible organic waste. The internal chamber 18 is located above the cutting blades 16 which are used to comminute and masticate the putrescible organic waste in use.

A primary water inlet in the form of water jet 24 is located in an upper portion of the chamber 18 and a secondary water inlet in the form of water jet 26 is located in a lower part of the chamber 18A. The lower part of the chamber 18A is conical and diverges into the cutting blades 16 of the comminution unit. The cutting blades are driven by a motor (not shown) internal or external to the comminution unit 12.

The water jets 24, 26 are fed by a mains water line 27 which includes an on/off control valve 28. The on/off control valve 28 is used to allow water to flow to the jets 24, 26 in use. The outlet 20 of the comminution unit 12 also includes a pump 32 which pumps waste pulp from the comminution unit 12 to the holding tank 14 via outlet line 21 and inlet pipe 13. A suitable such pump includes a worm driven pump or a diaphragm pump for example.

The holding tank 14 is connected to an inlet pipe 13 and an outlet pipe 15. The outlet pipe 15 includes a secondary gate valve 44 as shown in the diagram. The holding tank 14 also includes a level indicator in the form of electronic level indicator 40 which is used to sense the level 42 of the pulp in the holding tank 14 at any given time.

A two-way drainage valve 34 is located between the outlet line 21 and the inlet line 13. The two-way drainage valve 34 has one outlet that is connected to the inlet 13 and a drainage line 36 which is coupled to a sewerage system.

The PLC 30 is able to actuate the valve 28 to supply water to the comminution unit 12 as will be described below. The PLC 30 is also connected to the control panel 22 of the system 10.

The system as described above, with the exception of the holding tank 14, may be incorporated within a single unit so as to be conveniently located adjacent a food preparation or processing area, for example in a kitchen or a food processing plant. Such a unit may be appropriately sized, for example to a size similar to that of a domestic clothes washing machine, and the control panel 22 may optionally be integrally formed with the unit. Alternatively, the control panel 22 may be positioned adjacent the unit. Suitable materials from which the unit and various components within the unit are formed include stainless steel for example, thus allowing ease of cleaning and decontamination, if necessary. In an another embodiment of the invention, the holding tank 22 may be integrally formed within the unit for particular applications, and be removable such that it may be conveniently emptied.

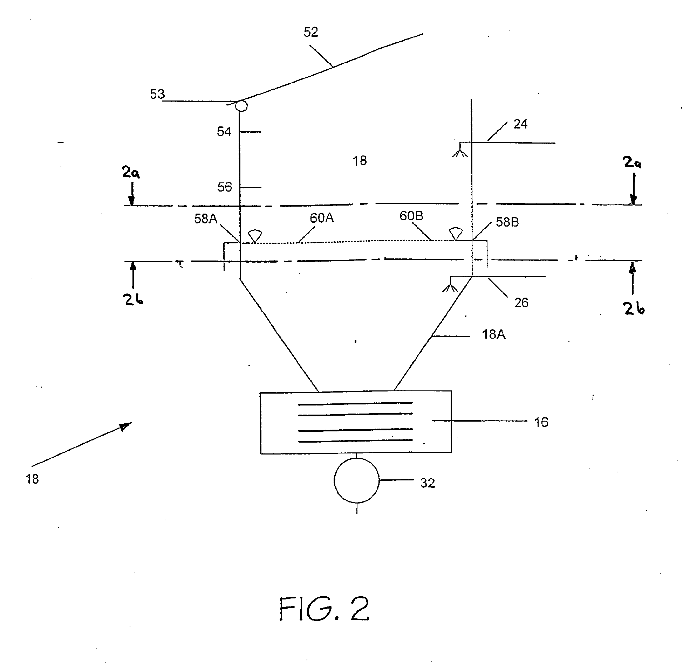

Referring to Figure 2 there is shown a more detailed diagram of the comminution unit 12. The comminution unit includes a lid 52 which pivots about pivot joint 53 and is used to cover the chamber 18 when the comminution unit is in operation. The chamber 18 also includes a two part base plate 60A, 60B, which are moveable between a closed position and an open position which is further described below.

The chamber 18 also includes a mid-level indicator 56 which indicates visually to a user of the comminution unit 12 the half capacity of the chamber 18 by volume. Additionally, a maximum indicator 54 is located in the chamber 18 which is used to indicate the maximum capacity of the chamber 18. Integral with the base plates 60A, 60B are two weight indicator devices 58A, 58B. The weight indicator devices 58A, 58B indicate the weight of the putrescible organic waste located in the chamber 18 prior to a comminution operation being performed.

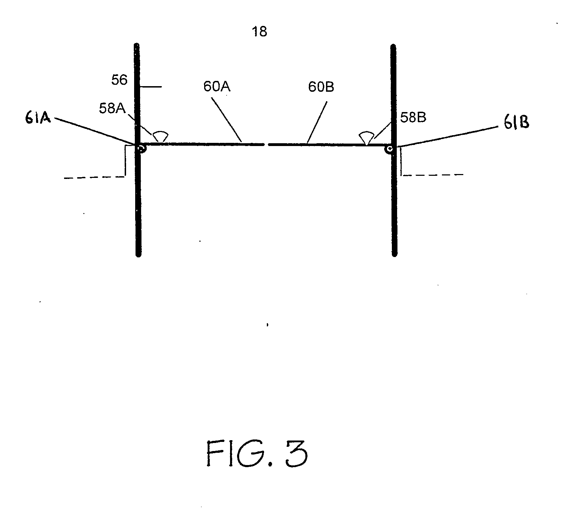

Referring to Figure 3, there is shown a detailed cross-section between the section lines 2a-2a and 2b-2bB of Figure 2. Although a gap is depicted in the region between base plates 60A and 60B, this gap is present for illustrative purposes only. In practical implantation of the invention, the base plates 60A and 60B touch each other to ensure that no material passes through the base plates during a loading operation.

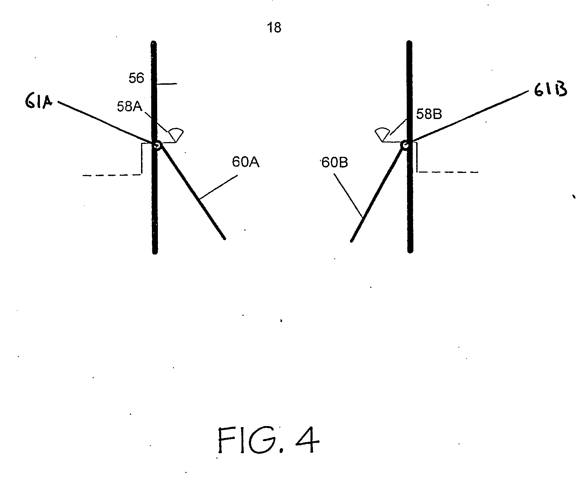

The base plates 60A and 60B may be formed from mesh material to allow excess water to drain from the plates during a comminution operation. The base plates 60A and 60B each pivot about respective hinges 61A and 61B between a close position as shown in Figure 3 and an open position as shown in Figure 4.

In Figure 4, the base plates 60A and 60B are illustrated in an open position, and extend into the cone part of the chamber 18A which funnels the putrescible organic waste material onto the cutter blades 16. The water jet 26 is directed onto the surface of the funnel to produce centrifugal flow of water and thereby ensure that all waste material is substantially funnelled onto cutting blades 16 of Figures 1 and 2. The cutting blades 16 comminute and masticate the putrescible organic waste material in the presence of the water to produce a putrescible organic waste pulp (waste pulp).

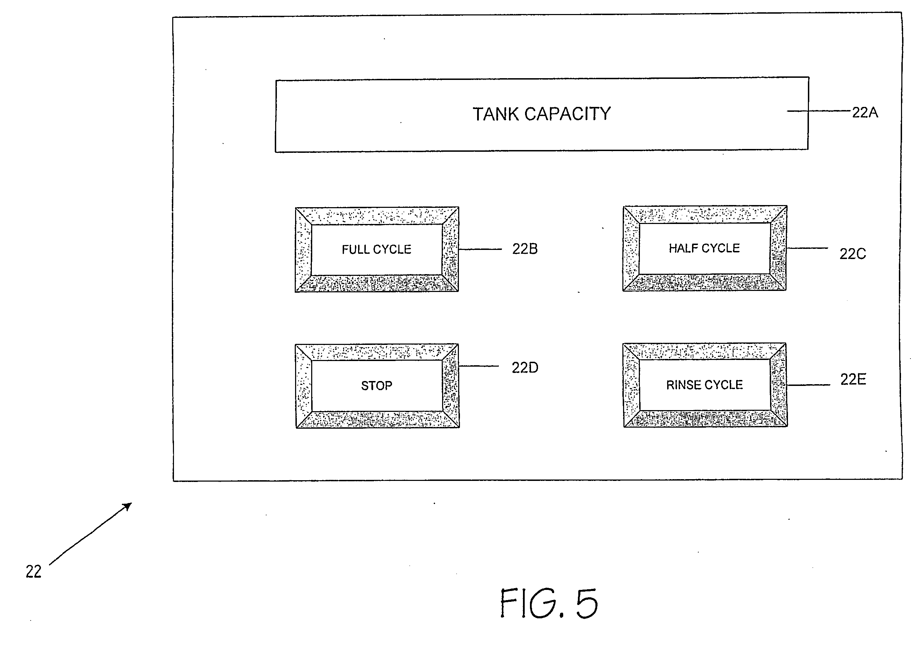

Referring to Figure 5, there is shown a more detailed diagram of the control panel 22 of Figure 1. The control panel 22 includes a display 22A, which displays the level of the holding tank 14; a full cycle button 22B, which inputs to the PLC 30 that the chamber 18 is full to high indicator level 54; a half cycle button 22C, which inputs to the PLC 30 that the chamber 18 is full to half indicator level 56; a stop button 22D, which terminates the comminution unit 12; and a rinse button 22E, which initiates a rinse cycle to rinse the comminution unit 12 and pipe work as will be described further below. Although in this example, a user manually operates the system, it should be understood that the system may be fully or partly automated and a variety of sensors and controllers maybe implemented within the system to at least partially control the various components of the system without departing from the scope of the invention

Again referring to Figure 1, a comminution process is described in accordance with an embodiment of the invention. The lid 52 is raised by an operator of the comminution unit 12, or automatically by implantation of an actuator means. Putrescible organic waste is loaded in the chamber 18 on base plates 60A, 60B which are in the closed position as depicted in Figure 3. In one preferred embodiment, the operator may load the putrescible organic waste up to level 56, or alternatively up to level 54. The lid 52 is closed and the operator, using the control panel 22, initiates the operation of the comminution unit 12. The operator indicate that the level of the chamber is either half full by pressing button 22C or completely full by pressing button 22B. A signal is sent to the PLC 30 which initiates the comminution cycle. The PLC 30 actuates the valve 28 so that a j et of water is supplied to the chamber 18.

The PLC 30 also sends a signal to a hydraulic actuator (not shown) which causes base plates 60A and 60B to lower and go to an open position as depicted in Figure 4. The waste material drops down onto the cone-shaped chamber 18A and the jet 26 is located at a position on the cone to cause the fluid to travel centrifugally to ensure that the waste material is swept off the surface of the cone 18A. The opening of the cone 18A leads onto the cutting blades 16 allowing the cutting blades 16 pulp the material to a predefined size. The valve 28 is actuated for a defined period of time by the PLC 30 to supply a predetermined amount of water to water jets 24, 26 so that an optimal waste pulp will be produced. The optimal pulp density is determined to ensure that the pulp is optimal for transportation from the holdingtank 14.

The pump 32 is also activated by the PLC 30 and transports the waste pulp to the holding tank 14. The pipe 21 may also include a filter 33 that can be removed from the pipe 21 periodically for cleaning. The filter 33 ensures the removal of materials that are not sufficiently comminuted by comminution unit 12 from the supply stream to holding tank 14. Inorganic materials such as plastic and cardboard will also be removed.

In operation the PLC opens two-way valve 34 so that pulp travelling via pipe 21 is transported to the tank inlet pipe 13.

In the case whereby the waste for a particular cycle is comprised essentially of a liquid or has liquid components, for example such as oils, gravies, juices, sauces and the like, the system 10 may be optionally operated without the comminution means being operated, whilst the waste is delivered to the holding tank 14. Such liquids provide high energy feedstock for digestion by a biodigestor. It will be appreciated that although such liquids may be introduced into the system and be added to a pulp already contained within the holding tank 14, the predetermined water content or density is still maintained by the addition of water, or alternatively by decanting excess water should there be an excess.

At the termination of the comminution operation, PLC 30 switches the two-way valve 34 so that the outlet goes to the drainage pipe 36. This allows the comminution unit 12 to be flushed by spraying water through the comminution unit 18 out through the cutting blades, and then the water which is substantially free of the putrescible organic waste, with the exception of the rinsed material, is then sent to a drainage point, such as the sewerage system.

Once the holding tank 14 is filled with pulp fluid at optimal or predetermined density, the contents of the holding tank 14 can be periodically removed by transportation such as by waste transportation truck 50 shown in Figure 1. The outlet to the holding tank 14 includes a valve 44, which is an on/off valve, which may be manually operatable.

In one preferred embodiment, the truck 50 transports the waste pulp to a biogas production plant which utilises the waste pulp as production feed for the production of a biogas.

The holding tank 14 also includes a level indicator 40, which indicates the level 42 of the holding tank 14. The level indicator 40 may optionally send a signal to the PLC 30 which then displays a level of the tank on the control panel 22. This allows a user of the system to electronically determine that when the level of the tank 42 is approaching full. Alternatively the level signal may be sent via a network, such as a telephone network, to a central location point which indicates to a collection authority, for example, that the holding tank 14 is approaching full capacity and the tank is ready for discharge.

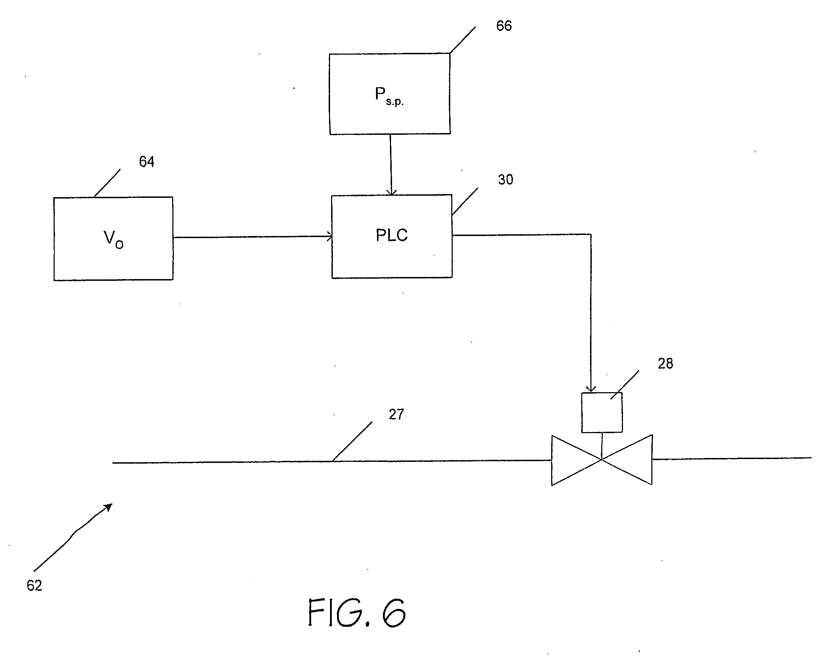

Referring to Figure 6, there is shown a schematic diagram of the control system 62 for the actuation of the valve 28 by PLC 30. The control system 62 includes a volume reading input V_{O} 64, which is input to the PLC 30 when the operator selects full cycle button 22B, half cycle button 22C or rinse cycle button 22E. An optimal pulp density set point P_{S.P.} is programmed into the PLC 30. The PLC 30, programmed with an algorithm that determines the amount of time that the valve 28 should be actuated to open in order to achieve an optimal pulp density or waste pulp density within an optimal or predetermined density range. It should be appreciated that although pulp density is disclosed in this embodiment as a set point variable, other pulp characteristics may also be chosen as a set point, including a predefined range of moisture content and a predefined range of flow characteristics.

An alternative form of controlling the system 10 is to determine weight of the putrescible organic waste material loaded in chamber 18. The weight of the putrescible organic waste located on base plates 60A and 60B is respectively input from weight indicators 58A and 58B as shown in Figures 2, 3 and 4, and input to PLC 30. This weight reading may be used to control the amount of water supplied to the comminution unit 12 to achieve the optimal pulp density.

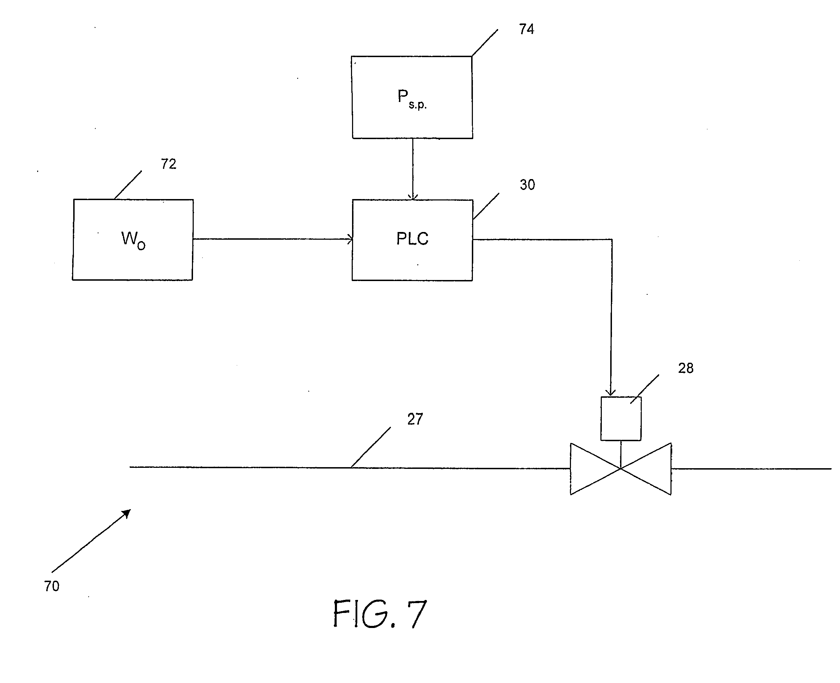

Referring to Figure 7, there is shown a schematic diagram of the control system 70 for the actuation of the valve 28 by PLC 30 when using weight indicated by weight indicators 58A and 58B. It will be appreciated that depending upon the characteristics of the pulp required, the particular weight for a given volume of material to be pulped is indicative of the amount of water required so as to achieve a pulped material as desired or required.

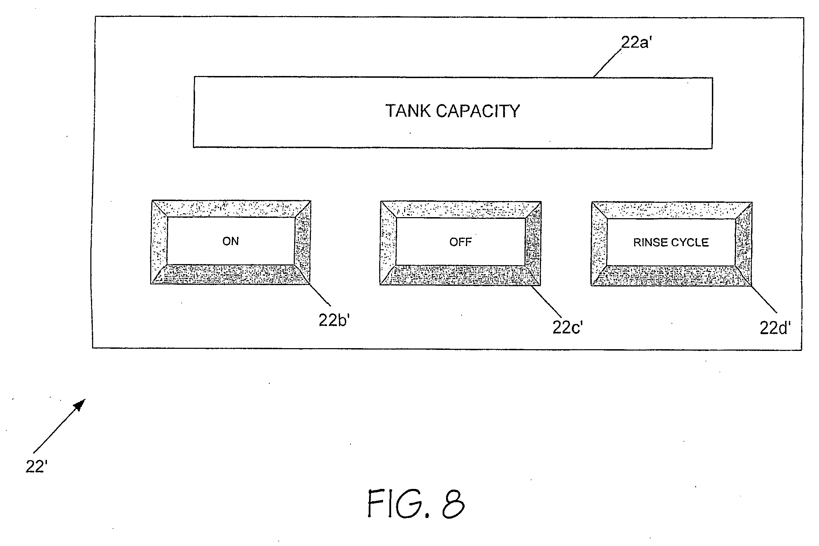

Referring to Figure 8, there is shown an alternate embodiment of the control panel 22' for use in the control system 70. The control panel includes: a display 22a', which displays the level of the holding tank 14; an "on" button 22b', which initiates the comminution cycle; an off button 22c' which terminates the comminution cycle and a rinse button 22d', which initiates a rinse cycle to rinse the comminution unit and pipe work.

When an operator selects on button 22b', the control system 70 as shown in Figure 7 is initiated. Firstly, a weight reading is input W_{O} 72 from the from weight indicators 58A and 58B and output to the PLC 30. An optimal pulp density set point P_{S.P.} 74 is programmed into the PLC 30. The PLC 30, programmed with an algorithm that determines the amount of time that the valve 28 should be actuated to open in order to achieve an optimal pulp density or waste pulp density within an optimal density range.

It will be appreciated that as the system 10 can be automated by control systems 62 or 70, the optimal pulp density of the waste pulp can be determined and consequently stored in the holding tank 14. This ensures that an excess or insufficient amount of water is used to produce the waste pulp for storage in holding tank 14. The optimal waste pulp density should be such that a minimal amount of water is included in the pulp to ensure comminution and transport through pipe work 20, 21, 13, 15. This ensures that the holding tank 14 is able to store the maximum amount ofputrescible organic waste for the capacity of the tank. This ensures that collection of putrescible organic waste from the holding tank 14 is minimised, thereby advantageously optimising the transportation process.

A further advantage of the present system 10 is that it prevents putrescible organic waste from being disposed of through the sewerage system, hence reducing loads on the sewerage system and the environment This reduces the volume of waste organic material being emitted by kitchens and the amount of waste required to be treated at treatment plants.

Clearly the density of the waste contained in the waste tank can be varied as required, either by adding water to the waste, or allowing the waste to settle and excess water to decant from the holding tank 14. This may be achieve by either allowing the excess water to pass through appropriate filters or baffles, so that the water leaving the tank is sufficiently clear to pass directly into the municipal sewerage system without requiring further treatment, or having some form of simple pre-treatment tank through which the water will pass before passing into either a sewerage system, or other treatment arrangement. Optionally the system can have a density control sensor located in the tank to evaluate whether water needs to be added to or removed from the tank in order to achieve the preferred density/flowability characteristics, thereby ensuring that the waste removal vehicle and system operates at optimum efficiency.

It will be further appreciated that as the system utilises a filter 33, inorganic materials such as plastic can be substantially prevented from entering the holding tank 14.

A further advantage of the invention is that as the pulp material is substantially organic, it can be used as a feed source in the production of biogas in a digester. Accordingly, the present invention allows more efficient and better control of collection of putrescible organic waste at the disposal point.

It will be appreciated that a number of systems according to the invention may be incorporated, for example in a high-rise unit block, and then piped to a single holding tank for ease of collection from one source.

It will also be appreciated that putrescible food waste, when dumped in conventional dumpsters, is often mixed with other non-degradable refuse and becomes useless for further processing due to the other non-degradable waste being present. Also, prior to the dumpster being emptied, the waste at least partially decomposes, causing discomfort and potentially health risk issues. Waste from such dumpsters is dumped at dumping sites and the food waste further degrades and decomposes, and emits methane gas, a gas identified as a partial cause of global warming. The present invention allows energy to be generated from such putrescible waste via a biogas digester, rather than the gas being allowed to heat the atmosphere prior to being burnt. A further environmental advantage is also given by the immediate absence of polymeric bags in which such putrescible waste is stored and dumped in, at a waste dumping site. Furthermore, the undesirable odour of decomposing food waste at conventional waste dumping sites is reduced by processing of such waste in accordance with the present invention.

## Claims

1. A putrescible organic waste treatment system (10) comprising:
a comminution unit (12) including comminution means adapted to substantially comminute putrescible organic waste into a pulp slurry, the comminution unit being adapted to be connected to a supply of water; and
a control means (30) adapted to control the flow rate and/or volume of water supplied to the comminution unit (12) such that during comminution of a particular amount of putrescible organic waste, the control means controls the quantity of water supplied to the comminution means such that a waste pulp having a predetermined physical characteristic is produced;
a holding tank (14) in fluid communication with said comminution unit (12) for receiving waste pulp from said comminution unit, said holding tank including a level indicator (40) for sensing the level of waste pulp in the holding tank; wherein
the level indicator is adapted to send a level signal, the level signal indicating that the holding tank is approaching full capacity and is ready for discharge.

2. A putrescible organic waste treatment system according to claim 1, wherein the level signal is sent to the control means.

3. A putrescible organic waste treatment system according to claim 1, wherein the level signal is sent to a central location point.

4. A putrescible organic waste treatment system according to any one of claims 1 to 3, wherein the predetermined physical characteristic of the waste pulp includes a predefined moisture content, density, range of densities, and/or flow characteristics.

5. A putrescible organic waste treatment system according to any one of claims 1 to 4, wherein said comminution unit comprises a chamber (18) for receiving the putrescible organic waste, the chamber being positioned above the comminution means.

6. A putrescible organic waste treatment system according to claim 5, wherein the chamber includes a conical wall portion extending radially inwardly and downwardly toward the comminution means to facilitate delivery of the putrescible organic waste to the comminution means.

7. A putrescible organic waste treatment system according to claim 6, wherein the chamber includes a floor portion which is moveable from a closed position to an open position so as to allow transfer of the putrescible organic waste from the chamber to the comminution means.

8. A putrescible organic waste treatment system according to claim 7, wherein the floor portion includes at least two floor members (60A/60B) extending radially outwardly and pivotably connected to the remaining potion of the chamber and arranged so as to be movable to the open position by an actuator such that the at least two floor members extend downwardly into said conical portion and allow the passage of putrescible organic waste to the comminution means.

9. A putrescible organic waste treatment system according to claim 8, further comprising a weighing means (58A/58B) arranged so as to determine the weight of putrescible organic waste in the chamber when the floor members are in a closed position.

10. A putrescible organic waste treatment system according to claim 9, wherein the weighing means is arranged so as to measure the weight of putrescible organic waste from the load applied to the floor members whilst in the closed position.

11. A putrescible organic waste treatment system according to any one of claims 1 to 10, wherein the quantity of water supplied to the comminution means so as to produce a waste pulp having the predetermined physical characteristic is determined by the weight of the putrescible organic waste.

12. A putrescible organic waste treatment system according to any one of claims 5 to 8 further comprising a sensing means for determining the level of putrescible organic waste in the chamber, wherein the level of putrescible organic waste is indicative of the amount of putrescible organic waste in the chamber.

13. A putrescible organic waste treatment system according to any one of claims 1 to 9, or 12, wherein the quantity of water supplied to the comminution means so as to produce the waste pulp having the predetermined physical characteristic is determined by amount of the putrescible organic waste.

14. A putrescible organic waste treatment system according to any one of claims 6 to 13, wherein the comminution unit further includes a primary water inlet located in the chamber and in fluid communication with said supply of water.

15. A putrescible organic waste treatment system according to claim 14, wherein the comminution unit further includes a secondary water inlet located below the primary water inlet.

16. A putrescible organic waste treatment system according to any one of claims 1 to 15, wherein the flow rate and/or flow volume of water supplied to the comminution means is regulated by a control valve which regulates the flow rate and/or flow volume uf the supply of water.

17. A putrescible organic waste treatment system according to claim 16, wherein the control valve is controlled by the control means.

18. A putrescible organic waste treatment system according to and one of claims 1 to 17, wherein the control means is a programmable logical controller (30).

19. A putrescible organic waste treatment system according to any one of claims 1 to 9 or 14 to 18, wherein the particular amount of putrescible organic waste is manually entered into the control means by a user.

20. A putrescible organic waste treatment system according to any one of claims 1 to 18, wherein the particular amount of putrescible organic waste is automatically entered into the control means.

21. A method of treating putrescible organic waste comprising the steps of:
comminuting a particular amount of putrescible organic waste;
supplying water to the putrescible organic waste to produce a pulp slurry;
controlling the flow rate and/or volume of water supplied to the particular amount of putrescible organic waste such that a waste pulp having a predetermined physical characteristic is produced;
transporting the waste pulp to a holding tank;
automatically sensing the level of waste pulp in the holding tank;
if the level of pulp in the holding tank is approaching full capacity, sending a level signal indicating that the holding tank is approaching full capacity and is ready for discharge.

22. A method of treating putrescible organic waste according to claim 21, wherein the predetermined physical characteristic of the waste pulp includes a predefined moisture content, density, range of densities, and/or flow characteristics.

23. A method of treating putrescible organic waste according to claim 21 or claim 22, wherein the level signal is sent to a central location point.

24. A method as described in claim 21 for producing a feed source for biogas fuel production further comprising the step of:
transporting pulp from the holding tank via a waste transportation truck and supplying the waste pulp to a digester for producing a biogas fuel.

25. A method for producing a feed source for biogas fuel according to claim 24, wherein the predetermined physical characteristic of the waste pulp includes a predefined moisture content, density, range of densities, and/or flow characteristics.

26. A method of producing a feed source for biogas fuel according to claim 24, wherein the level signal is sent to a central location point.

## Patentansprüche

1. Aufbereitungssystem (10) für verrottbaren Bioabfall, umfassend:
eine Zerkleinerungseinheit (12), die Zerkleinerungselemente enthält, die dazu ausgebildet sind, verrottbaren Biomüll in einen Stoffbrei zu zerkleinern, wobei die Zerkleinerungseinheit für einen Anschluss an eine Wasserversorgung ausgebildet ist; und
ein Steuermittel (30), das zum Steuern der Strömungsrate und/oder des Volumens des Wassers ausgebildet ist, das der Zerkleinerungseinheit (12) zugeleitet wird, so dass während der Zerkleinerung einer bestimmten Menge an verrottbarem Bioabfall das Steuermittel die Wassermenge steuert, die den Zerkleinerungselementen zugeleitet wird, so dass ein Abfallbrei mit vorgegebenen physikalischen Eigenschaften erzeugt wird;
einen Aufnahmetank (14) in Strömungsverbindung mit der Zerkleinerungseinheit (12) zum Aufnehmen des Abfallbreis von der Zerkleinerungseinheit, wobei der Aufnahmetank einen Pegelanzeiger (40) zum Erfassen des Pegels an Abfallbrei im Aufnahmetank enthält; wobei
der Pegelanzeiger zum Senden eines Pegelsignals ausgebildet ist, das anzeigt, dass sich der Aufnahmetank seiner vollen Kapazität nähert und für eine Entladung bereit ist.

2. Aufbereitungssystem für verrottbaren Bioabfall nach Anspruch 1, wobei das Pegelsignal zum Steuermittel gesendet wird.

3. Aufbereitungssystem für verrottbaren Bioabfall nach Anspruch 1, wobei das Pegelsignal zu einem zentralen Punkt gesendet wird.

4. Aufbereitungssystem für verrottbaren Bioabfall nach einem der Ansprüche 1 bis 3, wobei die vorgegebene physikalische Eigenschaft des Abfallbreis einen vordefinierten Feuchtigkeitsgehalt, eine vordefinierte Dichte, einen vordefinierten Bereich von Dichten und/oder vordefinierte Strömungseigenschaften enthält.

5. Aufbereitungssystem für verrottbaren Bioabfall nach einem der Ansprüche 1 bis 4, wobei die Zerkleinerungseinheit eine Kammer (18) zum Aufnehmen des verrottbaren Bioabfalls enthält, wobei die Kammer über den Zerkleinerungselementen angeordnet ist.

6. Aufbereitungssystem für verrottbaren Bioabfall nach Anspruch 5, wobei die Kammer einen konischen Wandabschnitt enthält, der sich radial nach innen und nach unten zu den Zerkleinerungselementen erstreckt, um die Abgabe des verrottbaren Bioabfalls an die Zerkleinerungselemente zu erleichtern.

7. Aufbereitungssystem für verrottbaren Bioabfall nach Anspruch 6, wobei die Kammer einen Bodenabschnitt enthält, der aus einer geschlossenen Position in eine offene Position bewegbar ist, so dass eine Überführung des verrottbaren Bioabfalls aus der Kammer zu den Zerkleinerungselementen möglich ist.

8. Aufbereitungssystem für verrottbaren Bioabfall nach Anspruch 7, wobei der Bodenabschnitt zumindest zwei Bodenelemente (60A/60B) enthält, die sich radial nach außen erstrecken, schwenkbar an den verbleibenden Abschnitt der Kammer angeschlossen sind und so angeordnet sind, dass sie von einem Stellglied derart in die offene Position bewegt werden können, dass die zumindest zwei Bodenelemente sich nach unten in den konischen Abschnitt erstrecken und den Durchgang des verrottbaren Biomülls zu den Zerkleinerungselementen ermöglichen.

9. Aufbereitungssystem für verrottbaren Bioabfall nach Anspruch 8, des Weiteren umfassend ein Wägeelement (58A/58B), das zum Bestimmen des Gewichts des verrottbaren Bioabfalls in der Kammer angeordnet ist, wenn sich die Bodenelemente in einer geschlossenen Position befinden.

10. Aufbereitungssystem für verrottbaren Bioabfall nach Anspruch 9, wobei das Wägeelement zum Messen des Gewichts des verrottbaren Bioabfalls aus der Last, die auf die Bodenelemente in ihrer geschlossenen Position ausgeübt wird, angeordnet ist.

11. Aufbereitungssystem für verrottbaren Bioabfall nach einem der Ansprüche 1 bis 10, wobei die Wassermenge, die den Zerkleinerungselementen zur Erzeugung eines Abfallbreis mit den vorgegebenen physikalischen Eigenschaften zugeführt wird, durch das Gewicht des verrottbaren Bioabfalls bestimmt wird.

12. Aufbereitungssystem für verrottbaren Bioabfall nach einem der Ansprüche 5 bis 8, des Weiteren umfassend ein Sensorelement zum Bestimmen des Pegels des verrottbaren Bioabfalls in der Kammer, wobei der Pegel des verrottbaren Bioabfalls die Menge des verrottbaren Bioabfalls in der Kammer anzeigt.

13. Aufbereitungssystem für verrottbaren Bioabfall nach einem der Ansprüche 1 bis 9 oder 12, wobei die Wassermenge, die den Zerkleinerungselementen zur Erzeugung des Abfallbreis mit den vorgegebenen physikalischen Eigenschaften zugeführt wird, durch die Menge des verrottbaren Bioabfalls bestimmt wird.

14. Aufbereitungssystem für verrottbaren Bioabfall nach einem der Ansprüche 6 bis 13, wobei die Zerkleinerungseinheit des Weiteren einen primären Wassereinlass enthält, der sich in der Kammer befindet und in Strömungsverbindung mit der Wasserversorgung steht.

15. Aufbereitungssystem für verrottbaren Bioabfall nach Anspruch 14, wobei die Zerkleinerungseinheit des Weiteren einen sekundären Wassereinlass enthält, der sich unter dem primären Wassereinlass befindet.

16. Aufbereitungssystem für verrottbaren Bioabfall nach einem der Ansprüche 1 bis 15, wobei die Strömungsrate und/oder das Strömungsvolumen von Wasser, das den Zerkleinerungselementen zugeleitet wird, von einem Steuerventil reguliert wird, das die Strömungsrate und/oder das Strömungsvolumen der Wasserversorgung reguliert.

17. Aufbereitungssystem für verrottbaren Bioabfall nach Anspruch 16, wobei das Steuerventil vom Steuermittel gesteuert wird.

18. Aufbereitungssystem für verrottbaren Bioabfall nach einem der Ansprüche 1 bis 17, wobei das Steuermittel eine programmierbare logische Steuerung (30) ist.

19. Aufbereitungssystem für verrottbaren Bioabfall nach einem der Ansprüche 1 bis 9 oder 14 bis 18, wobei die bestimmte Menge des verrottbaren Bioabfalls manuell von einem Anwender in das Steuermittel eingegeben wird.

20. Aufbereitungssystem für verrottbaren Bioabfall nach einem der Ansprüche 1 bis 18, wobei die bestimmte Menge des verrottbaren Bioabfalls automatisch in das Steuermittel eingegeben wird.

21. Aufbereitungsverfahren für verrottbaren Bioabfall, umfassend die folgenden Schritte:
Zerkleinern einer bestimmten Menge an verrottbarem Bioabfall;
Zuleiten von Wasser zu dem verrottbaren Bioabfall,
um einen Zellstoffschlamm zu erzeugen;
Steuern der Strömungsrate und/oder des Volumens des Wassers, das der bestimmten Menge an verrottbarem Bioabfall zugeleitet wird, so dass ein Abfallbrei mit einer vorgegebenen physikalischen Eigenschaft erzeugt wird;
Transportieren des Abfallbreis zu einem Aufnahmetank;
automatisches Erfassen des Abfallbreipegels im Aufnahmetank;
wenn der Breipegel im Aufnahmetank sich der vollen Kapazität nähert, Senden eines Pegelsignals, das anzeigt, dass sich der Aufnahmetank seiner vollen Kapazität nähert und für eine Entladung bereit ist.

22. Aufbereitungsverfahren für verrottbaren Bioabfall nach Anspruch 21, wobei die vorgegebene physikalische Eigenschaft des Abfallbreis einen vordefinierten Feuchtigkeitsgehalt, eine vordefinierte Dichte, einen vordefinierten Bereich von Dichten und/oder vordefinierte Strömungseigenschaften enthält.

23. Aufbereitungsverfahren für verrottbaren Bioabfall nach Anspruch 21 oder Anspruch 22, wobei das Pegelsignal zu einem zentralen Punkt gesendet wird.

24. Verfahren nach Anspruch 21 zum Produzieren einer Beschickungsquelle für eine Biogas-Brennstoffproduktion, des Weiteren umfassend die folgenden Schritte:
Transportieren eines Breis aus dem Aufnahmetank durch einen Abfalltransportlastwagen und Zuleiten des Abfallbreis zu einer Vergärungskammer zum Produzieren eines Biogasbrennstoffs.

25. Verfahren zum Produzieren einer Beschickungsquelle für Biogasbrennstoff nach Anspruch 24, wobei die vorgegebene physikalische Eigenschaft des Abfallbreis einen vordefinierten Feuchtigkeitsgehalt, eine vordefinierte Dichte, einen vordefinierten Bereich von Dichten und/oder vordefinierte Strömungseigenschaften enthält.

26. Verfahren zum Produzieren einer Beschickungsquelle für Biogasbrennstoff nach Anspruch 24, wobei das Pegelsignal zu einem zentralen Punkt gesendet wird.

## Revendications

1. Système de traitement de déchets organiques putrescibles (10), comprenant :
une unité de broyage (12) comprenant un moyen de broyage conçu pour essentiellement broyer des déchets organiques putrescibles en une suspension de pâte,
l'unité de broyage étant conçue pour être connectée à une alimentation d'eau ; et
un moyen de régulation (30) conçu pour réguler le débit et/ou le volume d'eau introduit dans l'unité de broyage (12) de manière à ce que, pendant le broyage d'une quantité particulière de déchets organiques putrescibles, le moyen de régulation régule la quantité d'eau introduite dans le moyen de broyage pour qu'une pâte de déchets ayant une caractéristique physique prédéterminée soit produite ;
un réservoir de stockage (14) en communication fluidique avec ladite unité de broyage (12), destiné à recevoir la pâte de déchets issue de ladite unité de broyage, ledit réservoir de stockage comprenant un indicateur de niveau (40) destiné à détecter le niveau de pâte de déchets dans le réservoir de stockage ;
l'indicateur de niveau étant conçu pour envoyer un signal de niveau, le signal de niveau indiquant que le réservoir de stockage approche la pleine capacité et est prêt pour le déchargement.

2. Système de traitement de déchets organiques putrescibles selon la revendication 1, dans lequel le signal de niveau est envoyé au moyen de régulation.

3. Système de traitement de déchets organiques putrescibles selon la revendication 1, dans lequel le signal de niveau est envoyé à un point d'emplacement central.

4. Système de traitement de déchets organiques putrescibles selon l'une quelconque des revendications 1 à 3, dans lequel la caractéristique physique prédéterminée de la pâte de déchets comprend une teneur en humidité, densité, plage de densités et/ou caractéristique d'écoulement prédéfinies.

5. Système de traitement de déchets organiques putrescibles selon l'une quelconque des revendications 1 à 4, dans lequel ladite unité de broyage comprend une chambre (18) destinée à recevoir les déchets organiques putrescibles, la chambre étant positionnée au-dessus du moyen de broyage.

6. Système de traitement de déchets organiques putrescibles selon la revendication 5, dans lequel la chambre comprend une partie de paroi conique qui s'étend radialement vers l'intérieur et vers le bas en direction du moyen de broyage pour faciliter la délivrance des déchets organiques putrescibles dans le moyen de broyage.

7. Système de traitement de déchets organiques putrescibles selon la revendication 6, dans lequel la chambre comprend une partie de fond qui peut être déplacée d'une position fermée à une position ouverte afin de permettre le transfert des déchets organiques putrescibles depuis la chambre vers le moyen de broyage.

8. Système de traitement de déchets organiques putrescibles selon la revendication 7, dans lequel la partie de fond comprend au moins deux éléments de fond (60A/60B) qui s'étendent radialement vers l'extérieur et sont connectés de manière pivotante avec la partie restante de la chambre et conçus de manière à pouvoir être déplacés en la position ouverte par un actionneur de manière à ce que les deux éléments de fond ou plus s'étendent vers le bas dans ladite partie conique et permettent le passage des déchets organiques putrescibles vers le moyen de broyage.

9. Système de traitement de déchets organiques putrescibles selon la revendication 8, comprenant également un moyen de pesée (58A/50B) conçu pour déterminer le poids des déchets organiques putrescibles dans la chambre lorsque les éléments de fond sont en une position fermée.

10. Système de traitement de déchets organiques putrescibles selon la revendication 9, dans lequel le moyen de pesée est conçu pour mesurer le poids des déchets organiques putrescibles à partir de la charge appliquée sur les éléments de fond lorsqu'ils sont en la position fermée.

11. Système de traitement de déchets organiques putrescibles selon l'une quelconque des revendications 1 à 10, dans lequel la quantité d'eau introduite dans le moyen de broyage pour produire une pâte de déchets ayant la caractéristique physique prédéterminée est déterminée par le poids des déchets organiques putrescibles.

12. Système de traitement de déchets organiques putrescibles selon l'une quelconque des revendications 5 à 8, comprenant également un moyen de détection destiné à déterminer le niveau de déchets organiques putrescibles dans la chambre, le niveau de déchets organiques putrescibles étant indicatif de la quantité de déchets organiques putrescibles dans la chambre.

13. Système de traitement de déchets organiques putrescibles selon l'une quelconque des revendications 1 à 9 ou 12, dans lequel la quantité d'eau introduite dans le moyen de broyage pour produire la pâte de déchets ayant la caractéristique physique prédéterminée est déterminée par la quantité de déchets organiques putrescibles.

14. Système de traitement de déchets organiques putrescibles selon l'une quelconque des revendications 6 à 13, dans lequel l'unité de broyage comprend également une entrée d'eau primaire située dans la chambre et en communication fluidique avec ladite alimentation d'eau.

15. système de traitement de déchets organiques putrescibles selon la revendication 14, dans lequel l'unité de broyage comprend également une entrée d'eau secondaire située sous l'entrée d'eau primaire.

16. Système de traitement de déchets organiques putrescibles selon l'une quelconque des revendications 1 à 15, dans lequel le débit et/ou le volume d'eau introduit dans le moyen de broyage est régulé par une vanne de régulation qui régule le débit et/ou le volume de l'alimentation d'eau.

17. Système de traitement de déchets organiques putrescibles selon la revendication 16, dans lequel la vanne de régulation est régulée par le moyen de régulation.

18. Système de traitement de déchets organiques putrescibles selon l'une quelconque des revendications 1 à 17, dans lequel le moyen de régulation est un régulateur logique programmable (30).

19. Système de traitement de déchets organiques putrescibles selon l'une quelconque des revendications 1 à 9 ou 14 à 18, dans lequel la quantité particulière de déchets organiques putrescibles est entrée manuellement dans le moyen de régulation par un utilisateur.

20. Système de traitement de déchets organiques putrescibles selon l'une quelconque des revendications 1 à 18, dans lequel la quantité particulière de déchets organiques putrescibles est entrée automatiquement dans le moyen de régulation.

21. Procédé de traitement de déchets organiques putrescibles, comprenant les étapes suivantes :
le broyage d'une quantité particulière de déchets organiques putrescibles ;
l'introduction d'eau dans les déchets organiques putrescibles pour produire une suspension de pâte ;
la régulation du débit et/ou volume d'eau introduit dans la quantité particulière de déchets organiques putrescibles de manière à ce qu'une pâte de déchets ayant une caractéristique physique prédéterminée soit produite ;
le transport de la pâte de déchets vers un réservoir de stockage ;
la détection automatique du niveau de pâte de déchets dans le réservoir de stockage ;
si le niveau de pâte dans le réservoir de stockage approche la pleine capacité, l'envoi d'un signal de niveau indiquant que le réservoir de stockage approche la pleine capacité et est prêt pour le déchargement.

22. Procédé de traitement de déchets organiques putrescibles selon la revendication 21, dans lequel la caractéristique physique prédéterminée de la pâte de déchets comprend une teneur en humidité, densité, plage de densités et/ou caractéristique d'écoulement prédéfinies.

23. Procédé de traitement de déchets organiques putrescibles selon la revendication 21 ou la revendication 22, dans lequel le signal de niveau est envoyé à un point d'emplacement central.

24. Procédé selon la revendication 21 pour la production d'une source d'alimentation pour la production d'un carburant biogaz, comprenant également l'étape suivante :
le transport de la pâte depuis le réservoir de stockage par un camion de transport de déchets et l'introduction de la pâte de déchets dans un digesteur pour la production d'un carburant biogaz.

25. Procédé de production d'une source d'alimentation pour carburant biogaz selon la revendication 24, dans lequel la caractéristique physique prédéterminée de la pâte de déchets comprend une teneur en humidité, densité, plage de densités et/ou caractéristique d'écoulement prédéfinies.

26. Procédé de production d'une source d'alimentation pour carburant biogaz selon la revendication 24, dans lequel le signal de niveau est envoyé à un point d'emplacement central.
